**Europäisches Patentamt**

**European Patent Office**

**Office européen des brevets**

(19)

(11) Publication number: **0 212 935**
**A2**

(12)

# EUROPEAN PATENT APPLICATION

(21) Application number: **86306236.0**

(22) Date of filing: **12.08.86**

(51) Int. Cl.⁴: **C 01 G 23/00**

(30) Priority: **12.08.85 IT 2192185**

(43) Date of publication of application: **04.03.87**
**Bulletin 87/10**

(84) Designated Contracting States: **BE DE FR GB IT NL SE**

(71) Applicant: **Montedison S.p.A., 31, Foro Buonaparte, I-20121 Milan (IT)**

(72) Inventor: **Gherardi, Paola, 14, via Visentin, I-28100 Novara (IT)**
Inventor: **Matijevic, Egon, 94 Market Street, Potsdam New York 13676 (US)**

(74) Representative: **Whalley, Kevin et al, MARKS & CLERK 57/60 Lincoln's Inn Fields, London WC2A 3LS (GB)**

(54) **Titanates of barium and strontium, and process for preparing the same.**

(57) Titanates of barium or of strontium, or mixed barium and strontium titanates, consisting essentially of solid, non-aggregated particles, having diameters from 0.05 to 1 micron and a very narrow particle size distribution expressed by the polydispersion index dw/dn of less than or equal to 1.20, where dw is the weight average diameter and dn is the number average diameter, said particles being perfectly spherical and having a total average axial ratio of at least 0.930. Such titanates are prepared by a process which provides the precipitation of a peroxidic precursor having the same morphological characteristics of the titanates, obtained by heating an alkaline solution comprising a complex of a titanium compound with a peroxidic compound, a $M^{2+}$ compound (selected from Ba, Sr or mixtures thereof) and a compound capable of complexing the $M^{2+}$ ion and able to be oxidized by the peroxidic compound unter the reaction conditions, giving rise to soluble decomposition products and such as to provide a homogeneous precipitation of the peroxidic precursor comprising titanium and $M^{2+}$, and by subsequently heating the precursor to temperatures not below 100°C to obtain the corresponding titanate having the above-indicated morphological characteristics.

The invention also provides similar titanates but having a broad particle size distribution wherein dw/dn is greater than 1.20 but not greater than 2.00.

1

## TITANATES OF BARIUM AND STRONTIUM, AND

## PROCESS FOR PREPARING THE SAME

The present invention relates to titanates of barium and of strontium, or to mixed barium and strontium titanates, consisting essentially of solid, spherical and non-aggregated particles, and to a process for their preparation.

More particularly, this invention relates to such titanates in powder form consisting essentially of perfectly spherical particles, having a very narrow particle size distribution (mono-dispersed powders), and having a diameter from 0.05 to 1 $\mu$m, and having a good dispersibility.

The various titanates of the invention, hereinafter generally referred to as titanates, have a broad range of uses, for example as ceramics for electronic components such as dielectric ceramics, piezoelectric ceramics, semiconductive ceramics, and pyroelectric ceramics.

A few of these applications are cited, for example, in "Fine Particle Perovskite Processing" by K.S. Mazdiyasni - Vol. 63, No.4 (1984), page 591 in Am. Ceram. Soc. Bull.

2

As is well known, in the preparation of sintered parts for electronic uses in general, it is necessary that the titanate should be present in the form of perfectly spherical particles, of sizes below 1 micron or at maximum up to 1 $\mu$m and that the particles should not be in the form of aggregates, so as to have a good dispersibility in order to obtain uniform sintering during the preparation of the ceramic bodies, with consequent uniformity of the density of the packed or pressed powder (green density).

In fact, one of the essential problems for the obtainment of high-technology ceramics is that of having a starting powder which permits ceramic systems to be obtained having a high reproduceability and reliability.

The lack of reproduceability is strictly connected, as is well known, with the control of the microstructures in the sintered bodies, which, as is also known, depend on the characteristics of the starting material. If the particles have a perfectly spherical form and a narrow particle size distribution (monodispersed particles), it has been established that the reproduceability characteristics are remarkably improved.

In brief, the basic starting powder parameters which permit high-technology ceramic systems to be obtained are:

**3**

- the particle diameter, which must be below 1 μm or at the most equal to 1 μm;
- the particle size distribution, which must be as narrow as possible, in particular dw/dn is less than or equal to 1.20, as defined hereinbelow;
- the particle shape, which must approximate to pefect sphericity;
- the particle agglomeration, which must be practically absent.

A powder having all the above-mentioned characteristics permits a uniform packing of the particles so as to minimise the voids among the particles, the resulting density of the packed or pressed powder being the most uniform possible.

Such packing and density offer several advantages, such as shorter sintering times, lower sintering temperatures, and a more uniform shrinkage, represented by a uniform densification of the microstructure, and the final system density tends to approach the theoretical density.

All the above-listed advantages are related to the characteristics of the starting powder, as explained hereinbefore. All the foregoing is well known and is described in detail in various scientific articles, among which there may be cited: R.L. Pober et al. in "Dispersion and Packing of Narrow Size Distribution Ceramic Powders" page 193, reported in "Emergent Process

4

Methods for High-Technology Ceramics" - Materials Science Research - vol. 17 - 1984 (ed. Robert F. Davis et al.); Plenum Press - New York and London; cap. 2, page 6 (Donald R. Ulrich) of the publication "Ultrastructure Processing Ceramics, Glasses and Composites" - 1984 - Ed. Larry Hench and Donald R. Ulrich - John Wiley and Sons.

However, titanate powders having the combination of characteristics mentioned hereinbefore are not presently available.

The increase in quality, which is necessary to obtain high-technology ceramic systems, is made possible only by synthesis methods directly leading to powders which exhibit the indicated combination of characteristics. The sizing methods which could be utilized, and are utilized at present due to the lack of powders of the type described hereinbefore, for obtaining powders consisting of particles having approximately the same diameter, do not in fact permit monodispersed particles to be obtained. This was ascertained for powders other than barium titanate, which is not available so far in the art in the form of monodispersed spherical particles, such as for example titanium dioxide, as shown in Figure 4 on page 200 of the article by R.L. Pober, previously mentioned.

There are known many processes for preparing barium titanate, such as for example:

- reaction, in the solid phase, of a Ba compound, for example a nitrate, oxalate, oxide or carbonate, with $TiO_2$;

- thermal decomposition of complex salts of Ba and Ti such as oxalates and citrates, obtained by reaction in the liquid phase;

- aging of a titanium gel in the presence of barium hydroxide at such concentrations as to obtain strongly basic pH values, by operating at temperatures from 60 to 100°C or higher.

By all the known processes of the art mentioned above it is not possible, as already explained, to obtain spherical and monodispersed particles. A titanate from a precursor consisting of a complex salt of the oxalate requires high decomposition temperatures which cause caking of the particles, with the consequent drawbacks mentioned above. Furthermore it must also be stressed that the particles of the complex utilized as a precursor never possess a spherical morphology.

By reacting the above indicated compounds in the solid phase there are obtained, in like manner, agglomerated products, since the process must be operated at high temperatures. Moreover, the particles do not exhibit a spherical form and have sizes above 1 micron, as a result of which they require grinding

6

post-treatments which always give rise to polydispersed products and to highly impure products. Other liquid-phase preparation methods are known, such as the method described in US Patent No. US-A-4,061,583, in which there is used, as a precursor of the titanate, a peroxidic complex which evolves to titanate by heating to a temperature higher than or equal to 100°C. This process leads to products with sizes below one micron but without any spherical form.

In published European Patent Application No. EP-A-141,551 there is described a method of preparing various titanates, in particular of $BaTiO_3$, via gel as described above, in which the $BaTiO_3$ particles have a much more defined morphology than the products known in the art, but are not spherical. This method of operating by utilizing a heterogeneous system in which one of the components is in the solid phase makes it difficult to control the morphology, although it permits to work at much lower temperatures as compared with the reactions in the solid phase. Furthermore, the resulting titanate is in the form of polydispersed particles. The lack of a perfect sphericity and a wide distribution of the diameters leads to the drawbacks described hereinabove.

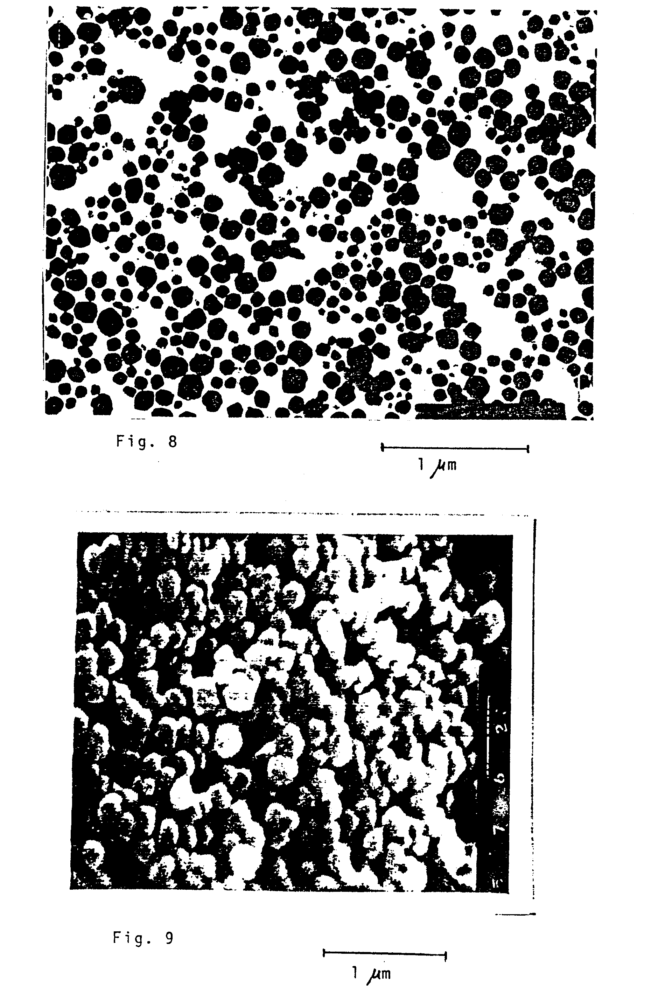

Example 1, repeated by the Applicant hereof, of Patent Application No. EP-A-145,551, is shown in Figure 8 of the accompanying drawings under TEM (magnification:

36700 times) and in Figure 9 of the drawings under SEM (magnification: 30000 times); TEM stands for transmission electron microscope, and SEM stands for scanning electron microscope. The diameter of the particles is 0.11 μm, the ratio dw/dn is equal to 1.36, and the total average axial ratio D (as defined hereinbelow) is 0.836.

From the powders obtained according to Patent Application No. EP-A-145,551 it is not possible, for example, to prepare very thin films with regular microstructures and, as a consequence, ceramic bodies exhibiting a high uniformity. This is a serious limitation to the use of these powders since it does not permit, for example, high capacity capacitors to be produced. Furthermore, the polydispersion adversely affects all the subsequent molding steps of the ceramic bodies, as the stability of the dispersions is not constant in the time due to the coagulation of the small particles with the bigger ones. This results in a further worsening of the packing with consequent drastic decrease in the densification.

In addition, in the packed products obtained by sedimentation, by gravity or by centrifugation, a polydispersed product, as a consequence of the different particles sedimentation velocities, leads to the

8

obtainment of non-uniform, stratified films, as is illustrated in detail in the above-cited literature articles.

Furthermore, the process employed in the European Patent Application No. EP-A-145,551 requires operation in a fully $CO_2$-free atmosphere. In fact, the presence of $CO_2$ would cause a partial forming of $BaCO_3$ along with $BaTiO_3$, which would result in composition dishomogeneities and in a considerable morphological irregularity of titanate. In fact, $BaCO_3$ is a compound to be avoided because it leads to agglomeration of the $BaTiO_3$ powder as it necessitates temperatures of about 700°C for its complete removal. Operating in a fully $CO_2$-free atmosphere requires a long time to obtain the final product $BaTiO_3$, as is clearly apparent from the examples of said patent application.

Thus, there is a requirement for a method of providing titanates having the cited characteristics, chiefly in the form of fully spherical particles obtainable by means of a very simple process.

It has now surprisingly been found that it is possible to obtain titanates having the characteristics necessary to form high-technology ceramic bodies by the process of the present invention.

The present invention in one aspect provides a powder of barium titanate, of strontium titanate or of a mixed barium and strontium titanate, consisting essentially of solid non-aggregated particles exhibiting a substantially perfectly spherical form, having diameters from 0.05 to 1 μm, and having a very narrow particle size distribution expressed by a polydispersion index dw/dn of less than or equal to 1.20, in which dw is the weight average diameter and dn the number average diameter, the said spherical particles having a total average or mean axial ratio D = a/b at least higher than or equal to 0.930, in which b is the maximum diameter of each particle and a is the corresponding orthogonal diameter.

Preferably, the polydispersion index of the titanates of the invention is less than or equal to 1.10, and the diameter of the perfectly spherical particles ranges from 0.15 to 0.5 μm.

The powders having a polydispersion index less than or equal to 1.20 are simply referred to as monodispersed powders; when dw/dn is less than or equal to 1.30, the particles are considered to have a low polydispersion index; if dw/dn is less than or equal to 2.00, the powders are considered to be polydispersed.

The average sizes (dw and dn) and the morphological and granulometric characteristics are determined under an electron microscope by the TEM technique. The method of determining dw and dn is described by E.A. Collins, J.A. Davidson and C.A. Daniels in "Review of Common Methods of Particles Size Measurement", Journal of Paint Technology, vol. 47, No. 604, May 1975.

The total average axial radio D is determined by calculating the arithmetical mean of the values obtained on a sample consisting of a high number of particles.

In the present invention, the ratio D was calculated by measuring the maximum diameter b of each particle and the corresponding orthogonal diameter for a sample of 300 particles.

The particle diameter dn is determined under the electron microscope according to the transmission technique (TEM), as mentioned above.

The particle size distribution dw/dn is determined, besides by TEM as already mentioned, also by Sedigraph curves by dispersing the powders in isopropyl alcohol. The data obtained from the two methods are fully in accordance.

The present invention also provides polydispersed titanates, having dw/dn less than or equal to 2.0 and greater then 1.20, which retain unaltered all the remaining characteristics mentioned for the monodispersed product, such as sphericity and total average axial ratio  As already pointed out, the polydispersed powders are not desirable for the above-cited electronic appliances; however, the perfect sphericity of the particles leads, for all the known uses of the art, to better results than those achievable

11

with the titanate powders obtained so far, although inferior to those obtained with the monodispersed and perfectly spherical powders of the first aspect of the invention.

The powder of the various titanates of the present invention is in the amorphous form and the Ba/Ti molar ratio can be adjusted so as to have ratios of $1.00 \pm 0.04$ as determined by gravimetric and colorimetric analysis or by the atomic absorption technique.

However, for particular electronic applications, excesses of Ba or of Ti are added to control the properties of the material during sintering. For example, a Ba excess in the calcined product permits the growth of the grains to be limited.

The presence of an excess of Ti ions permits more easily sinterizable titanates to be obtained. The Ba/Ti molar ratio can be suitably adjusted within values ranging from 0.60 to 1.10, with the above-mentioned limit of error of $\pm 0.04$.

The purity of the titanate product, whether monodispersed or polydispersed, is very high, generally higher than 98% by weight. It is also possible to dope the titanates of the invention, whether monodispersed or polydispersed, by means of doping agents of type p or n, without modifying the morphology and the particle size distribution, using, for example, Al, Sn, Sb, Nb, Ta, Mn, Fe or rare earth elements.

12

The doping agent in the final product is generally of the order of 0.01% by weight or even lower. In this way modified titanates are obtained, the applications of which are well known in literature as a function of the electric characteristics of the doping agent, as is reported, for example, in the above-mentioned article by K.S. Mazdiyasni.

Further applications of the modified titanates are cited in "Ceramic Multilayer Capacitors and Nonlinear Resistors" by R. Wernicke, page 677, Science of Ceramics 12.

The amorphous titanates can be utilized for the said electronic applications as such, without any necessity of being transformed into the corresponding crystalline phases. In fact, these are directly obtained during the sintering step. This is a further advantage of the powders of the present invention, as any possible aggregations which may occur during the calcining step to obtain the crystalline phases are eliminated.

However, if so desired, the titanates of the invention can be transformed into crystalline titanates further to calcining.

The titanates according to the present invention may be prepared by a process comprising the steps of:

A) homogeneously precipitating a peroxide precursor comprising Ti(IV) and M(II), in which M is Ba, Sr or a mixture thereof, such precipitation comprising:

a) preparing a basic solution at a pH value from 9 to 11.5, which contains a soluble complex of Ti with a peroxidic compound V, a solution of $M^{2+}$ ions, in which M is as defined above, a compound Z capable of complexing $M^{2+}$ ion and capable of being oxidized by peroxidic compound V, thus providing decomposition products which are soluble in the reaction medium; and

b) heating clear solution (a) in the presence of an excess of peroxidic compound V, such as to cause a homogeneous precipitation of the said peroxidic precursor;

B)  heating the peroxidic precursor (A) to a temperature not less than 100°C and in any case such as to lead to the corresponding amorphous titanates having the same morphology as the peroxidic precursor (A).

The complex between M and Z may be oxidized, as indicated, by peroxidic compound V, in order to give free ion $M^{2+}$, to precipitate the corresponding peroxidic precursor, or may be decomposed by any substance able to react with Z in order to remove Z from the complex between M and Z giving free ion $M^{2+}$, to form the corresponding peroxidic precursor.

As peroxidic compound V it is possible to use any compound capable of forming complexes with the titanium ions. In particular, hydrogen peroxide is preferably employed.

14

As compound Z it is possible to use any compound capable of forming complexes with ion M(II) and which is oxidizable by peroxidic compound V by means of heating, gradually releasing ion $M^{2+}$ from the complex, such as to cause a homogeneous precipitation of peroxidic precursor (A) and such that the oxidation products of Z with V may be soluble in the reaction medium.

As compounds Z it is possible to use, for example, the ammonium, sodium and potassium salts of ethylenediaminotetra-acetic acid (EDTA), nitrilo-triacetic acid (NTA), diethylenetriaminopenta-acetic acid (DTPA), hydroxyethylenediaminotriacetic acid (HEDTA), cyclohexylenedinitrilotetra-acetic acid (CDTA), a salt of EDTA being preferably used. The corresponding acids of the above-cited salts are also utilizable.

The term "homogeneous precipitation" means a precipitation carried out under such conditions as to provide a slow, gradual and uniform release of ions M (II) in the solution, to avoid local oversaturations of the solution. In the process of the present invention, this is achieved because at the beginning there is the formation of the complexes of Ti(IV) with peroxidic compound V, and of ion M (II) with compound Z, both said complexes being stable complexes and soluble at basic pH values; the clear solution formed by the two complexes in consequence of heating provides solid particles of

15

the peroxidic precursor comprising M and Ti owing to the fact that the peroxidic compound V, which is present in a stoichiometric excess with respect to Ti (IV), is capable of oxidizing, with controlled kinetics, the compound Z, with consequent slow release of ion M (II), that forms a precipitate with the anionic complex of Ti (IV) with the peroxidic compound.

As abovesaid, it is essential that complexes solution indicated at step (b) be clear, to allow a homogeneous precipitation.

As titanium compound it is possible to use any compound capable of forming soluble complexes with peroxidic compound V. In particular there are used titanium compounds with a valence equal to 4, such as alcoholates, chlorides, and nitrates, preferably chlorides and alcoholates. As an alcoholate it is preferable to use isopropylate and ethylate.

If titanium compounds with valence III are utilized, it is necessary to use an excess of peroxidic compound V in order to cause the oxidation of Ti to the higher valence.

As compounds of M (II) it is possible to use chlorides, perchlorides and nitrates.

Aqueous solutions of NaOH, KOH, preferably ammonia, are used as basifying agents to obtain the basic pH.

In particular when $H_2O_2$ is employed as a peroxidic compound, a compound of Ti (IV) is utilized as a Ti compound and a salt of ethylenediaminotetra-acetic acid or a similar abovesaid compounds is used as component Z acting as a complexing agent for M (II), the peroxidic precursor is precipitated by operating under the conditions described hereinbelow.

To the basic solution having a pH ranging from 9 to 11.5 there is added a clear solution of Ti (IV) complexed with $H_2O_2$, then the excess of $H_2O_2$, subsequently compound Z, and finally the solution of M (II) is added, the final concentrations of the various reagents being the following: $H_2O_2$ ranging from 0.175 to 2.10 M; Ti (IV) less than or equal to $2.10^{-2}$ M; M (II) less than or equal to $2.10^{-2}$; the molar ratio M (II)/Ti (IV) from 0.8 to 1.2; and the molar ratio Z/M (II) from 1.4 to 2.6 when M (II) = $Ba^{2+}$, from 1.0 to 1.5 when M (II) = $Sr^{2+}$, and from (1.4 x + 1.0 y) to (2.6 x + 1.5 y) when a mixture of $Sr^{2+}$ and $Ba^{2+}$ is used, in which x is the molar fraction of $Ba^{2+}$ and y is the molar fraction of $Sr^{2+}$ where x + y = 1.

The final concentrations of both Ti (IV) and M (II) which are preferably employed range from $2 \times 10^{-3}$ M to $1 \times 10^{-2}$ M, and preferably they are such that the M(II)/Ti(IV) molar ratio is 1.0.

17

Organic compound Z is preferably utilized in such amounts that the $Z/Ba^{2+}$ molar ratio is 1.5 and the $Z/Sr^{2+}$ molar ratio is 1.2.

The final concentration of $H_2O_2$ is preferably from 0.5 and 1.5 M.

Compounds Z can be added as solids directly to the solution, or in the form of aqueous solutions, prior to the addition of $M^{2+}$.

The total concentration of hydrogen peroxide can be reached by adding the excess of $H_2O_2$ either to the reaction medium or to the Ti (IV) starting solution. The clear solution of Ti (IV) complexed with $H_2O_2$ is generally prepared by adding a Ti (IV) compound to an acid (unless $TiCl_4$ is used as Ti(IV) compound), then $H_2O_2$, and then by adding $H_2O$ until the desired Ti (IV) concentration is obtained.

Alternatively, the mother titanium solution can be prepared by adding Ti-compound, for example Ti-alkoxide, to a basic solution of $H_2O_2$ under vigorous stirring and cooling.

It is preferable to operate with precipitation times from 30 minutes to 4 hours, more preferably from 1 hour to 2 hours, as the reaction is almost quantitative already at these reaction times. The peroxidic precursor precipitation temperature ranges from 30 to 100°C, more preferably from 40 to 70°C. The lower the precipitation temperature, the longer the time to obtain

18

a quantitative yield. It is possible to operate at atmospheric pressure or at higher pressures, and in such case the time required for the precipitation decreases.

The process according to the present invention can be realized in batch or in a continuous plug-flow reactor.

For heating the peroxidic precursor to amorphous titanate there is utilized a temperature of at least 100°C, preferably 120°C, and in any case at such temperature as to permit the break of all the peroxidic bonds and to maintain the precursor morphology unaltered. Generally the treatment temperature ranges from 100°C to 300°C.

The amorphous titanates provide furthermore crystalline titanates by heating in air at temperatures higher than 500°C.

Crystalline titanates maintaining the morphological characteristics of the precursors are obtained by heating the precursor at temperatures of at least 550°C, under vacuum, for a time sufficient to effect the complete transformation to the crystalline phase. Generally, a vacuum of $10^{-2}$ mmHg is found to be sufficient.

Temperatures higher than 550°C may also be used; in this case, generally, the calcination time is lower. In any case, temperatures of about 550°C are preferred, to avoid powder agglomeration phenomena.

Generally, the peroxidic precursor is calcined until elimination of peroxidic bonds, as indicated above; later the temperature of the oven is brought up to 550°C, or to the prefixed temperature, by a more or less fast heating rate, preferably of about 2-4 hours.

The crystalline phase is determined by X-ray diffraction. The titanates obtained by heating the precursor to temperatures not lower than 100°C, subjected to gravimetric quantitative analysis and to atomic absorption analysis, exhibit a molar ratio M/Ti from 0.60 ($\pm$ 0.04) to 1.10 ($\pm$ 0.04), such ratio being adjustable mainly through the concentration of peroxidic compound V.

The morphology of the samples is analysed under a transmission electron microscope (TEM) and under a scanning electron microscope (SEM).

To the clear reaction solution for the preparation of the peroxidic precursor, as mentioned hereinbefore, it is possible to add also one or more dispersing or growth-regulating agents which, however, in the case of narrow particle size distribution titanates, do not substantially affect the aggregation, but can affect the final diameter of the particles of the titanates obtained. Among such substances there may be mentioned polyvinyl alcohol, polyethylene glycol, and non-ionic dextrane.

Such dispersants are dissolved in water at concentrations of 1 g/l, and such an amount thereof is withdrawn that the dispersant in the reaction volume indicated in the example should be generally from 50 to 200 mg.

It is possible to add to the starting solution also triethanolamine at a concentration of less than or equal to 0.2 M for concentrations of M (II) and Ti (IV) less than or equal to $1.10^{-2}$ without obtaining substantial variations in the obtainment of monodispersed titanates.

Conversely it has been found, according to a further aspect of the present invention, that it is possible to obtain polydispersed titanates (dw/dn less than or equal to 2.0 but greater than 1.20) by operating with triethanolamine concentrations different from those indicated.

The polydispersed titanates are obtainable by the same process indicated for the monodispersed titanates, by operating in the presence of low concentrations of triethanolamine, about $2 \times 10^{-2}$ M and at concentrations of M (II) and Ti (IV) higher than those indicated (greater than $1 \times 10^{-2}$ M), and preferably for short times, of the order of 15 minutes. A product tending to become polydispersed is obtainable also by operating at high concentrations of triethanolamine (greater than 0.2 M), in the range of the Ti (IV) and M (II) concentrations indicated for the monodispersed titanates. In the latter case, however, the reaction yields are lower when the reaction is operated with the same times as indicated for the monodispersed titanate.

Generally, for concentrations of Ti and $M^{2+}$ of 2 x $10^{-2}$M or greater than 1 x $10^{-2}$M, in order to obtain titanates having a spherical morphology, as described, precipitation is carried out in presence of nucleation-regulating substances such as amines. Generally, soluble amines are found to be suitable, for example triethylamine, propylamine, triethanolamine, and their preferred concentration is about 0.1 M.

In either of the aspects of the process of the invention, a doping agent of type n or p as previously described may be added to solution (a).

The invention will be further described with reference to the following illustrative Examples. In the following Examples, reference is made to the accompanying drawings, which are microphotographs of the products of the Examples under TEM and SEM magnifications (other than Figures 8 and 9 as previously described).

Preparation of the mother solutions

All the reagents utilized are of grade RPE produced by Farmitalia-Carlo Erba, with the exception of $(NH_4)_2H_2EDTA$, which is a reagent RP produced by

22

Fluka. The $H_2O$ used for the dilutions was previously double distilled and filtered on a Nuclepore 0.2 μm filter.

A : to 16.6 cc of HCl at 37% by weight there were added 14.7 cc of Ti(i-PrO)$_4$, 27.2 cc of 10.3 M $H_2O_2$ and 441.5 cc of $H_2O$ obtained from a solution of 0.1 M Ti (IV);

B : 123 cc of $NH_3$ (30% by weight) were diluted in 877 cc of $H_2O$ providing a 1.98 M $NH_3$ solution;

C : 32.6 g of $(NH_4)_2H_2EDTA$ were dissolved in 1000 cc of $H_2O$, providing a solution of 0.1 M $(NH_4)_2H_2EDTA$;

D : 24.4 g of $BaCl_2 \cdot 2H_2O$ were dissolved in 1000 cc of $H_2O$, providing a 0.1 M Ba (II) solution;

E : to 26.5 cc of $N(C_2H_4OH)_3$ there were added 29.4 cc of Ti(i-PrO)$_4$, 20 cc of 10.5 M $H_2O_2$ and 924.1 cc of $H_2O$, thus obtaining a 0.1 M Ti (IV) solution.

Example 1

To 62 cc of solution B there were added, under stirring and in the following order, 45 cc of solution A, 45 cc of a 10.3 M $H_2O_2$ solution, 90 cc of solution C and, gradually, 45 cc of solution D.

To the resulting clear solution, $H_2O$ was added until there was obtained a final volume of 900 cc. The pH of the solution, measured by means of a potentiometer, was 9.5.

The clear solution was introduced into a non-stirred reactor and heated by means of a bath thermoregulated at 60°C, during 2 hours.

The resulting suspension was filtered on a Millipore filter, and the product collected on the filter was washed to neutrality of the washing water and was subsequently dried under vacuum for 8 hours at 110°C.

The yield of $BaTiO_3$ was 90% with respect to the theoretical yield.

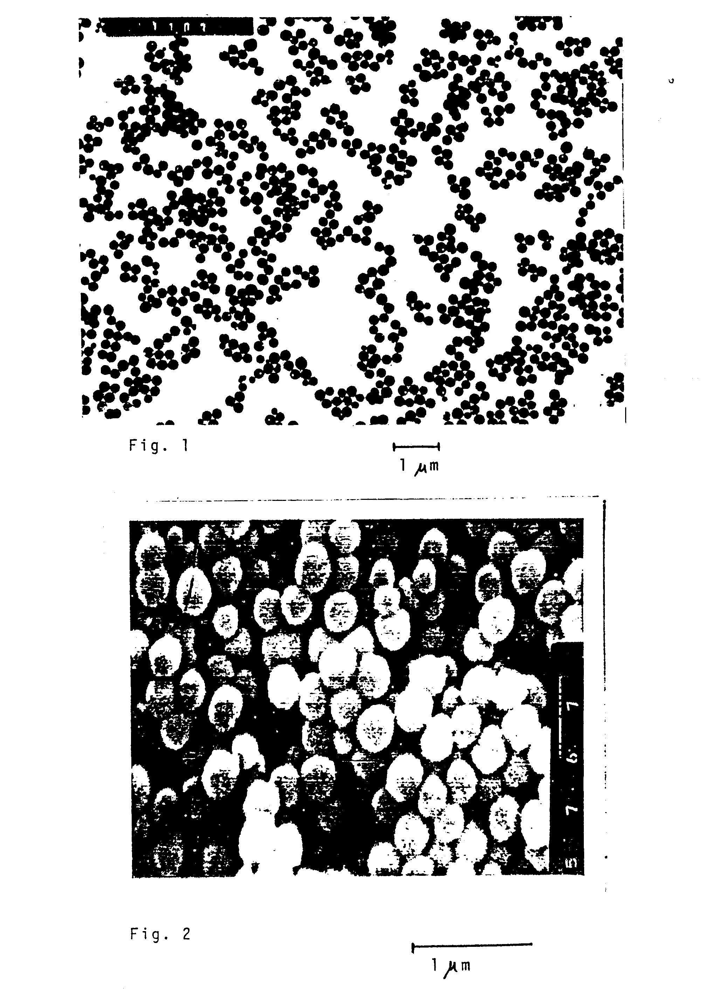

The product obtained, subjected to X-ray analysis, was found to be amorphous barium and exhibited a Ba/Ti molar ratio equal to 0.99, measured by atomic absorption, and a perfectly spherical morphology on TEM and SEM analysis (Figures 1 and 2), with particles having a number average diameter dn of 0.21 µm, a polydispersion index dw/dn of 1.06 and a total average axial ratio D of 0.95.

The TEM magnification (Figure 1) was 10,994 times, while the SEM magnification (Figure 2) weas 30,000 times.

The peroxidic precursor exhibited, before heating to 110°C, under the TEM and the SEM, the same morphology as the titanate shown in Figures 1 and 2.

Example 1A (comparative test)

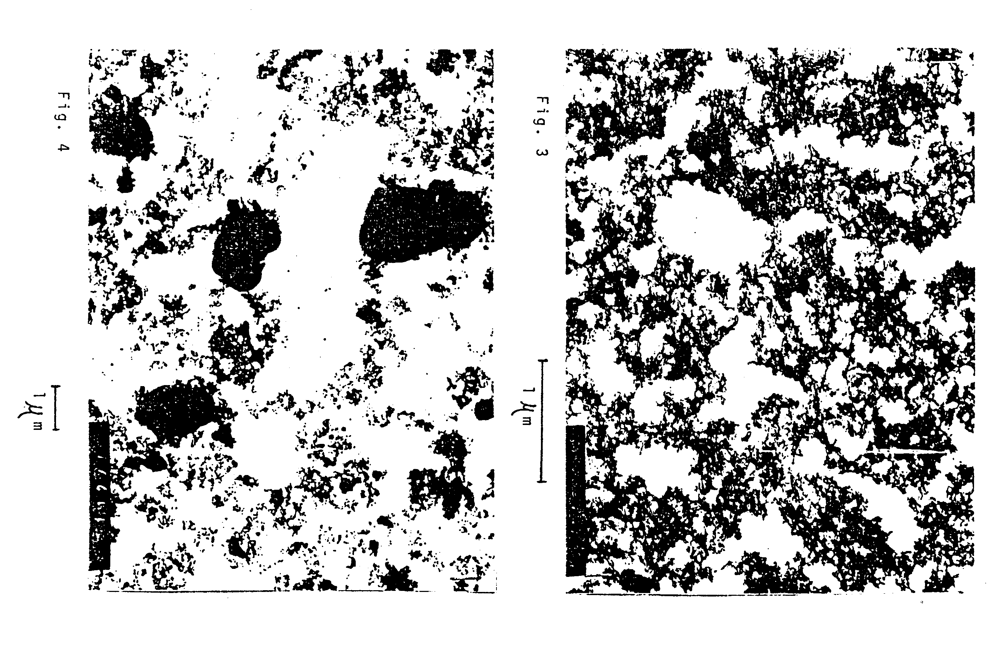

Example 1 was repeated, but without addition of solution C, maintaining the final volume equal to 900 cc. Under these conditions, the starting solution was

24

not clear. The product obtained (peroxidic precursor), shown in Figure 3, exhibited an undefined morphology. The TEM magnification shown in Figure 3 was 29,400 times.

Example 1B (comparative test

Example 1 was repeated, but using only 20 cc of solution B, maintaining the final volume equal to 900 cc, thus obtaining a final solution having a pH equal to 8.8. As shown in Figure 4, a precipitate (peroxidic precursor) having an undefined morphology was obtained. The TEM enlargement of Figure 4 was 10,400 times.

Example 2

Example 1 was repeated, but heating the solution for 6 hours. The results were similar to those of Example 1, but in this case the $BaTiO_3$ yield corresponded to the theoretical one.

Example 3

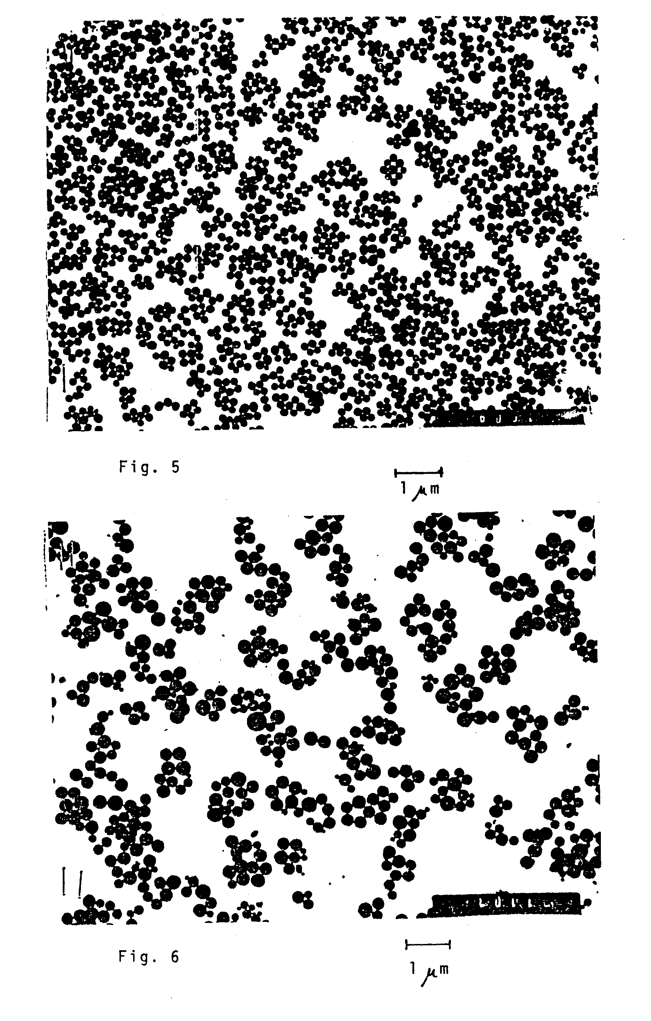

Example 1 was repeated, but using 30 cc of 10.3 M $H_2O_2$, maintaining the final volume equal to 900 cc and heating the solution to 40°C during 1 hour. As shown in Figure 5, there was obtained a product with a perfectly spherical morphology, having a dn equal to 0.16 μm, a dw/dn ratio of 1.08, a total average axial ratio D of 0.931, and a Ba/Ti molar ratio equal to 1.00. The TEM magnification of Figure 5 was 10,700 times.

Example 4

Example 1 was repeated, but heating the solution to 100°C for 1 hour; the obtained results were similar to those of Example 1 as regards particle size and morphology.

Example 5

Example 1 was repeated, but utilizing 153 cc of the 10.3 M $H_2O_2$ solution, maintaining the final volume equal to 900 cc and heating to 50°C for 2 hours. There was obtained a product having a perfectly spherical morphology and exhibiting a dn equal to 0.15 μm, a dw/dn ratio of 1.10, a total average axial ratio D of 0.932, and a Ba/Ti molar ratio equal to 1.00.

Example 6

Example 1 was repeated, but using 15.4 cc of the 10.3 M $H_2O_2$ solution, maintaining the final volume equal to 900 cc. The peroxidic product, subjected to TEM analysis and shown in Figure 6, revealed a perfectly spherical morphology, having a dn equal to 0.25 μm, a dw/dn ratio equal to 1.15, a total average axial ratio D of 0.940, and a Ba/Ti molar ratio equal to 0.8. The TEM magnification of Figure 6 was 10,994 times.

Example 6A (comparative test)

Example 6 was repeated, but using 7.5 cc of the 10.3 M $H_2O_2$ solution and maintaining the final volume equal to 900 cc. A precipitate having an undefined morphology was obtained.

Example 7

Example 1 was repeated, but adding to the solution, before heating, 150 cc of a 1 g/l solution of polyethylene glycol 4000. (Fluka product, having an average molecular weight of 4000). The product was found to consist essentially of particles having a dn equal to 0.16 μm.

Example 8

Example 7 was repeated, but using 150 cc of a 1 g/l solution of non-ionic dextrane 6000. (Fluka product, having an average molecular weight of 6000). The product was found to consist of particles having a dn equal to 0.45 μm.

Example 9

Example 1 was repeated, but utilizing 45 cc of solution E instead of solution A, and 47 cc of solution B and making up with water to 900 cc the volume of the final solution. The product was found to consist essentially of particles having a dn equal to 0.15 μm, a dw/dn ratio of 1.05 and an axial ratio D of 0.941.

Example 10

Example 9 was repeated, adding a further 30 cc of $N(C_2H_4OH)_3$ to the final solution and making up with water to a 900 cc volume.

27

A product with the following characteristics was obtained:

- dn   = 0.08 μm,

- dw/dn = 1.22.

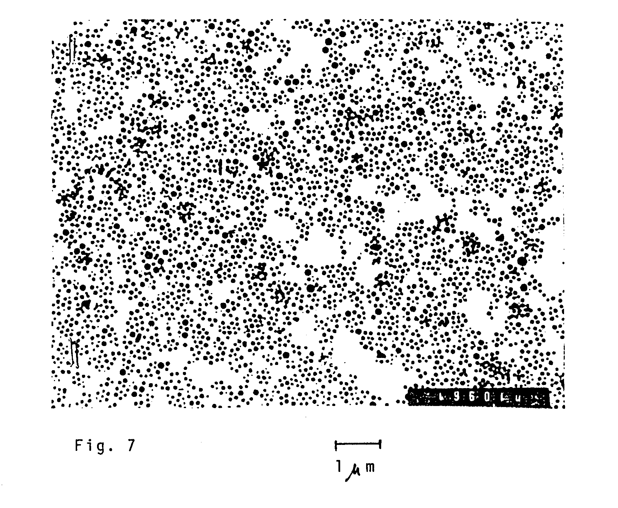

The product is shown in Figure 7 (TEM analysis, magnification 10,700 times).

Example 11

Example 9 was repeated, but utilizing a volume of solution E and a volume of solution D such that the final concentration of Ti (IV) and of Ba (II) was $10^{-2}$M and using the same Z/Ba ratio as in Example 9 (Z = $(NH_4)_2$ $H_2$EDTA), and heating for 15 minutes. There was obtained a non-aggregated and polydispersed product with dw/dn = 1.24 and dn = 0.17 μm.

Example 12

The product obtained in Example 1 was calcined at 550°C for 2 hours, and, on X-ray diffraction analysis, was found to be a cubic-phase crystalline barium titanate.

Example 13

Example 11 was repeated, but using, instead of solution E, a solution F prepared in like manner as solution E, but with $SrCl_2$ . $2H_2O$ in such amount that it was 0.1 M in Sr (II), and employing 105 cc of solution C, 132 cc of 10.5 M $H_2O_2$, bringing the volume to 900 cc and reacting for 2 hours. The resulting product was found to consist of spherical particles having a dn equal to 0.41 μm.

Example 14

Starting solutions were prepared as follows:

a)  40     cc of 1.98 M $NH_3$ (Solution B);

20     cc of 10.3 M $H_2O_2$;

7.35   cc of Ti $(i-PrO)_4$;

182.65 cc of double distilled and filtered $H_2O$;

thus obtaining a 0.1 M solution of Ti;

b1) 0.1 M solution of $Ba(OH)_2$ prepared by dissolving in $CO_2$-free atmosphere 31.548 g of $Ba(OH)_2 \cdot 8H_2O$ in 1000 cc of double distilled water and by filtering the resulting solution on a Nuclepore 0.2 μm membrane.

b2) 0.1 M solution of $Ba(OH)_2$ prepared by dissolving 31.548 g of $Ba(OH)_2 \cdot 8H_2O$ in 1000 cc of a solution containing 32.6 g of $(NH_4)_2H_2$ EDTA.

To 60 cc of solution B were added in the following order:

100 cc of solution (a)

100 cc of solution (b2)

40 cc of solution (C)

50 cc of 10.3 M $H_2O_2$

650 cc of double distilled filtered $H_2O$.

The solution was aged under stirring (300 rpm) at 60°C for 2 hours.

The product was washed with water and dried at 110°C under vacuum of $10^{-1}$ mmHg. The dried product was treated at 550°C for 2 hours, by using a 100°C/hr heating rate, under a vacuum of $10^{-2}$ mmHg.

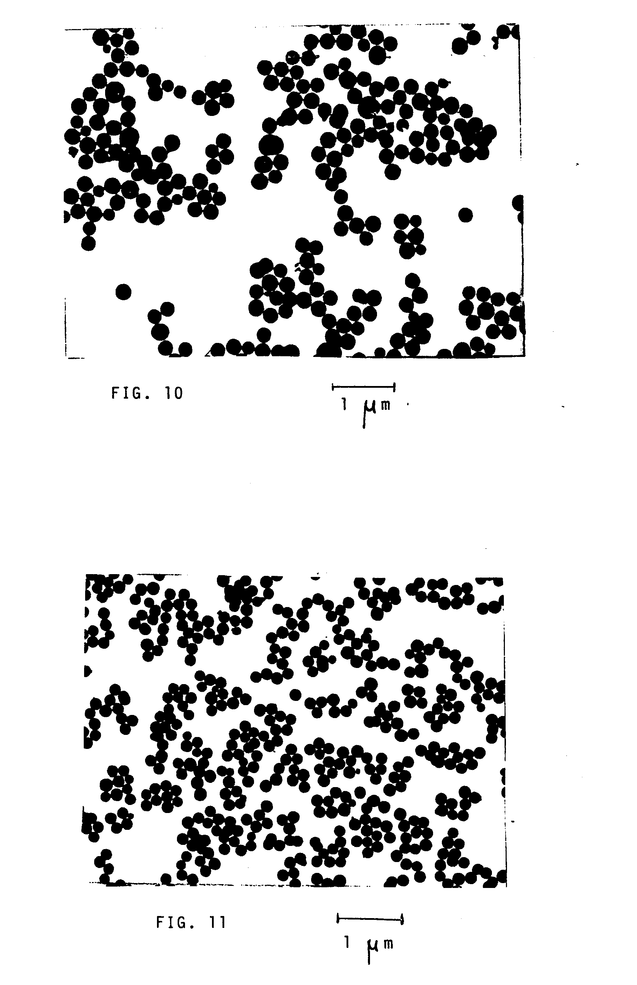

The resulting product, under X-ray analysis, was found to be crystalline $BaTiO_3$. The product after calcination is shown in Fig. 10 (TEM analysis, magnification 14700X), and consisted of perfectly spherical and non-agglomerated particles.

Example 15

The dried product of Example 1 was subjected to the calcination treatment described in Example 14. The resulting product showed the same morphological and crystalline characteristics of that of Example 14.

Example 16

To 150 cc of solution (a) were added 12 cc of $NEt_3$ (triethylamine), 150 cc of solution (b2) and 60 cc of solution C.

The aging of the solution and the drying of the resulting product were carried out as in Example 14. The product obtained had a very similar morphology to that shown in Fig. 7.

Example 17

Example 1 was repeated using 60 cc of a solution of DTPA 0.1 M (prepared by dissolving 7.879 g of diethylenetriamine-pentacetic acid with 50.5 cc of solution B ($NH_3$, 1.98 M) and adjusting the final volume to 200 cc) instead of 90 cc of solution C. The final volume of the starting solution was 900 cc and the pH was 9.7.

The aging of the solution and the drying of the resulting product were carried out as in Example 14. The morphology of the resulting product under TEM is shown in Fig. 11 (magnification 14700 X).

31

CLAIMS:

1. Titanates of barium, strontium, or mixed barium and strontium, characterized by consisting essentially of solid, spherical, non-aggregated particles, of diameter from 0.05 to 1 μm, and having a particle size distribution expressed by a polydispersion index dw/dn of less than or equal to 1.20, in which dw is the weight average diameter and dn is the number average diameter, the said spherical particles having a total average axial ratio $D = a/b$ of at least 0.930, in which b is the maximum diameter of each particle and a is the corresponding orthogonal diameter.

2. A titanate as claimed in claim 1, characterized in that the polydispersion index dw/dn is less than or equal to 1.10.

3. A titanate as claimed in claim 1 or 2, characterized in that the diameter of the spherical particles is from 0.15 to 0.5 μm.

4. Titanates of barium, strontium or mixed barium and strontium, characterized by consisting essentially of solid, spherical particles of diameter from 0.05 to 1 μm, and having a particle size distribution expressed by a polydispersion index dw/dn of less than or equal to 2.00 and greater than 1.20, in which dw is the weight average diameter and dn is the number average diameter, the said spherical particles having a total average axial ratio D = a/b of at least 0.930, in which b is the maximum diameter of each particle and a is the corresponding orthogonal diameter.

5. A titanate as claimed in any of claims 1 to 4, characterized by having a purity higher than 98% by weight.

6. A titanate as claimed in any of claims 1 to 5, characterized by further comprising a doping agent of type n or p in a concentration of 0.01% by weight or lower.

7. A titanate as claimed in claim 6, characterized in that the doping agent consists of Al, Sn, Sb, Nb, Ta, Mn, Fe or a rare earth element.

8. A titanate as claimed in any of claims 1 to 7, characterized in that the Ba/Ti molar ratio is from 0.60 to 1.10, with an error of $\pm$ 0.04.

9. A process for preparing a titanate as claimed in claim 1, characterized by comprising the steps of:

A) homogeneously precipitating a peroxidic precursor comprising Ti (IV) and M (II), in which M is Ba, Sr or a mixture thereof, said precipitation comprising:

a) preparing a basic solution at a pH value from 9 to 11.5, which contains a soluble complex of Ti with a peroxidic compound V, a solution of ions $M^{2+}$, in which M is the same as defined hereinbefore, a compound Z capable of complexing ion $M^{2+}$ and able

to be oxidized by peroxidic compound V, thus providing a decomposition product soluble in the reaction medium; and

    b) heating the clear solution (a) in the presence of an excess of peroxidic compound V, such as to cause a homogeneous precipitation of the said peroxidic precursor; and

B)    heating the peroxidic precursor (A) to a temperature not less than 100°C and able to lead to the corresponding amorphous titanate having the same morphology as the peroxidic precursor (A).

    10. A process as claimed in claim 9, characterized in that compound Z is selected from the ammonium, sodium and potassium salts of ethylenediaminotetra-acetic acid (EDTA), nitrilo-triacetic acid (NTA), diethylenetriaminopenta-acetic acid (DTPA), hydroxyethylenediaminotriacetic acid (HEDTA), cyclohexylenedinitrilotetra-acetic acid (CDTA), and the corresponding acids of the abovesaid salts.

    11. A process as claimed in claim 9 or 10, characterized in that the peroxidic compound is $H_2O_2$.

    12. A process as claimed in claim 11, characterized in that the pH is from 9 to 11.5; the $H_2O_2$ concentration is from 0.17 to 2.10 M; the concentration of the Ti and Ba or Sr ions are less than or equal to $2.10^{-2}$ M; the M (II)/Ti molar ratio is from 0.8 to 1.2; and the Z/M (II) ratio is from 1.4 to 2.6 when M = Ba, from 1.0 to 1.5 when M = Sr, and from (1.4 x + 1.0 y) to (2.6 x + 1.5 y) when M is a mixture of Sr and Ba, x being the molar fraction of $Ba^{2+}$ and y the molar fraction of $Sr^{2+}$, and x+y = 1.

13. A process as claimed in claim 12, characterized in that the molar concentrations of Ti and M (II) are from $2.10^{-3}$ to $1.10^{-2}$ M, and the concentration of $H_2O_2$ is from 0.5 to 1.5 M.

14. A process as claimed in claim 12 or 13, characterized in that the Z/M molar ratio is 1.5 when M = Ba and 1.2 when M = Sr.

15. A process as claimed in any of claims 9 to 14, characterized by comprising, in the preparation of solution (a), a dispersant.

16. A process as claimed in claim 15, characterized in that the dispersant is selected from polyethylene glycol, polyvinyl alcohol, and non-ionic dextrane.

17. A process for preparing a titanate as claimed in claim 4, characterized by comprising the steps of:

A) homogeneously precipitating a peroxidic precursor comprising Ti (IV) and M (II), in which M is Ba, Sr or a mixture thereof, said precipitation comprising:

a) preparing a basic solution at a pH value from 9 to 11.5, which comprises a soluble complex of Ti with a peroxidic compound V, a solution of ions $M^{2+}$, in which M is the same as defined hereinbefore, a compound Z capable of complexing ion

$M^{2+}$ and able to be oxidized by peroxidic compound V, thus providing a decomposition product soluble in the reaction medium; and

b) heating clear solution (a) in the presence of an excess of peroxidic compound V, such as to cause a homogeneous precipitation of the above-mentioned peroxidic precursor; and

B) heating the peroxidic precursor (A) to a temperature not less than 100°C and able to lead to the corresponding amorphous titanate having the same morphology as the peroxidic precursor (A);

the solution (a) comprising triethanolamine at a concentration of about $2.10^{-2}$ M when the concentration of M (II) and of Ti is greater than $1.10^{-2}$M, or greater than 0.2 M when M and Ti are at a concentration of less than or equal to $1.10^{-2}$M.

18. A process as claimed in any of claims 9 to 17, characterized by adding to solution (a) a doping agent of type n or p.

19. A process as claimed in claim 18, characterized in that the doping agent consists of Al, Sn, Sb, Nb, Ta, Mn, Fe or a rare earth element.

20. A process as claimed in claim 18 or 19, characterized in that the doping agent is added in a concentration of 0.01% by weight or lower.

Fig. 1

1 μm

Fig. 2

1 μm

Fig. 3

1 μm

Fig. 4

1 μm

Fig. 5

1 μm

Fig. 6

1 μm

Fig. 7

├─────┤
1 μm

Fig. 8

1 μm

Fig. 9

1 μm

FIG. 10

1 μm

FIG. 11

1 μm